# EUROPEAN PATENT APPLICATION

(11) **EP 4 606 346 A1**
(43) Date of publication of application: **27.08.2025**
(21) Application number: 23879992.8
(22) Date of filing: 24.08.2023
(51) Int. Cl.: A61C 8/00, A61C 3/025

(54) **FIXTURE FOR DENTAL IMPLANT, AND IMPLANT SYSTEM COMPRISING SAME**

(30) Priority: 21.10.2022 KR 20220136416
(71) Applicant: MGNewton Co., Ltd., Daegu 42132 (KR)
(72) Inventor: PARK, Kwang Bum, Daegu 42016 (KR)
(74) Representative: Patentanwälte Hemmer Lindfeld Frese Partnerschaft mbB
(86) International application number: PCT/KR2023/012544
(87) International publication number: WO 2024/085411

(57) **Abstract**

Disclosed are a fixture for dental implant, and an implant system comprising the same. A fixture for dental implant according to the inventive concept includes a thread body having a threaded portion spirally formed in an outer circumference direction and placed in a basal bone, and a non-thread body arranged above the thread body, having at least a portion arranged above the basal bone when the thread body is placed in the basal bone, and having a length of 0.8 times to 1.5 times the length of the thread body.

## Description

### TECHNICAL FIELD

The inventive concept relates to a fixture for dental implant and an implant system comprising the same, and more particularly, to a fixture for dental implant that may be placed in the basal bone even when there is no or insufficient alveolar bone for placement of a fixture according to the conventional technology.

### BACKGROUND ART

An implant originally means a substitute used to restore lost human tissues. In a dental field, however, the implant refers to an artificial tooth.

It is a procedure to restore the function of a tooth by placing a fixture in an alveolar bone where a tooth is lost, and then fixing an artificial tooth thereon. The fixture is a tooth root made of titanium and the like having no rejection by the human body to replace a lost tooth root.

For general prostheses or dentures, while the surrounding teeth and bone are damaged as time passes, the implant does not damage the surrounding teeth tissues, has the same function and shape as a natural tooth, and does not cause cavities, and thus, it is advantageous that the implant can be used semi-permanently.

Although an artificial tooth procedure (or referred to as an implant or an implant procedure) varies depending on various types of fixtures, it is general to make a hole at a placement position by using a certain drill, place a fixture into an alveolar bone to be osseointegrated with the bone, couple an abutment to the fixture, and then completely capping the abutment with a final prosthesis.

The implant not only restores a single missing tooth, but also improves the function of dentures for partially edentulous and completely edentulous patients, and improves the aesthetic aspect of dental prosthetic restorations. Furthermore, the implant distributes excessive stress applied to the surrounding supporting bone tissues and also helps the stabilization of the dentition.

This implant generally includes a fixture placed as an artificial tooth root, an abutment coupled on top of the fixture, an abutment screw for fixing the abutment to the fixture, and an artificial tooth coupled to the abutment. In this state, before the abutment is coupled to the fixture, that is, for a period until the fixture is osseointegrated with the alveolar bone, a healing abutment (not shown) may be coupled to the fixture to maintain a coupling state.

The fixture, which is one component of the implant, is a portion to be placed in a drill hole formed in the alveolar bone at a position where the implant is performed, by using a drill and the like, and serves as an artificial tooth root. Accordingly, the fixture should be firmly placed in the alveolar bone.

Accordingly, a threaded portion is formed on the outer surface of the fixture to be firmly coupled to an inner wall portion of the alveolar bone forming the drill hole. The threaded portion is led into the alveolar bone to not only allow the fixture and the alveolar bone to be firmly coupled to each other, but also increase the contact area between the fixture and the alveolar bone, thereby reinforcing the fixing force of the fixture to the alveolar bone.

Meanwhile, the jaw bone is divided into the alveolar bone supporting the tooth root and a basal bone related to the face shape. Generally, the basal bone and the alveolar bone together are referred to as the gingiva bone or the alveolar bone. However, the basal bone and the alveolar bone will be referred to with a clear distinction. This intends to explain the present invention to be distinguished from most conventional technologies in which the fixture is placed in the alveolar bone.

As briefly described above, the dental fixture according to the related art is mostly placed in the alveolar bone. When a tooth is missing, the alveolar bone is gradually lost. Accordingly, when the alveolar bone is almost absorbed and only the basal bone is left, an implant procedure is impossible because the dental fixture according to the related art is difficult to be placed in the alveolar bone.

Considering the problem, bone grafting is performed in the conventional technology. The bone grafting method is performed when the alveolar bone becomes weak or bone density and bone mass are insufficient after tooth loss. In other words, in the conventional technology, it is general to implant an artificial tooth after the alveolar bone of the gingiva is reinforced with a bone grafting material.

However, in the fixture for dental implant according to the related art, there is a problem that bone grafting is costly and time consuming, and also, there is no guarantee that all bone grafting will be successful.

Accordingly, considering the above problem, it may be considered to place the fixture for dental implant according to the related art in the basal bone. However, when the fixture for dental implant according to the related art is placed in the basal bone, there is a risky structure to further promote bone recession in the alveolar bone, and when the fixture is placed in a portion such as the anterior teeth portion, it is a problem that the threaded portion is exposed to the outside of the gingiva, making it aesthetically poor.

Thus, in order to implement new ideas of placing in the basal bone, there is a need to develop a new concept dental implant system that is easy to apply because it can be used without major changes to the existing prosthesis, while having a structure that can implement the ideas.

### DESCRIPTION OF EMBODIMENTS

### TECHNICAL PROBLEM

The inventive concept provides a fixture for dental implant, which may be placed in the basal bone without first performing bone grafting so that an implant procedure time can be reduced, bone recession in the alveolar bone can be reduced compared with the conventional technology, excellent aesthetics can be obtained without exposing a threaded portion of the fixture even when the fixture is placed in a rather narrow portion such as an anterior teeth portion, and easy application of the fixture is possible because the fixture can be used without major changes in the existing prosthesis, and an implant system having the fixture for dental implant.

### ADVANTAGEOUS EFFECTS OF DISCLOSURE

According to the implant system of the present embodiment, the fixture may be placed in the basal bone without first performing bone grafting so that an implant procedure time can be reduced, bone recession in the alveolar bone can be reduced compared with the conventional technology, excellent aesthetics can be obtained without exposing the threaded portion 101 of the fixture even when the fixture is placed in a rather narrow portion such as an anterior teeth portion, and easy application of the fixture is possible because the fixture can be used without major changes in the existing prosthesis.

### BRIEF DESCRIPTION OF DRAWINGS

FIG. 1 is a view illustrating the procedure process of a fixture for dental implant according to an embodiment of the inventive concept.
FIG. 2 is a perspective view of the fixture for dental implant of FIG. 1.
FIG. 3 is a side view of the fixture for dental implant of FIG. 1.
FIG. 4 is a cross-sectional view of the fixture for dental implant of FIG. 1.
FIG. 5 is a view illustrating a state in which an abutment and an abutment screw are coupled to each other in the fixture for dental implant of FIG. 4.
FIG. 6 is a plan view of the fixture for dental implant of FIG. 1.
FIG. 7 is a view for describing an implant system including the fixture for dental implant of FIG. 1.

### BEST MODE

According to an aspect of the inventive concept, a fixture for dental implant includes: a thread body having a threaded portion spirally formed in an outer circumference direction and placed in a basal bone; and a non-thread body arranged above the thread body, having at least a portion arranged above the basal bone when the thread body is placed in the basal bone, and having the length of 0.8 times to 1.5 times the length of the thread body.

The thread body may be surface-treated by any one of a sandblasted, large grit, and acid-etched (SLA) surface treatment and a resorbable blast media (RBM) surface treatment, and the non-thread body may not be surface-treated by any one of a sandblasted, large grit, and acid-etched (SLA) surface treatment and a resorbable blast media (RBM) surface treatment.

The non-thread body may have a machined surface.

At least a portion of the non-thread body may be in contact with the alveolar bone when the thread body is placed in the basal bone.

The non-thread body may have a length of 1.0 time to 1.5 times the length of the thread body.

The non-thread body may include: a non-thread variable portion having a diameter that is the same as or less than a maximum outer diameter of the threaded portion, provided with the same diameter from a lower end to an upper end or with a diameter gradually decreasing from the lower end to the upper end, and capable of naturally entering according to entering of the threaded portion; a non-thread connection portion connecting the thread body to the non-thread variable portion; and a non-thread abutment coupling portion provided above the non-thread variable portion for coupling to an abutment.

The non-thread abutment coupling portion is an outer conical abutment coupling portion, in which a cross-section of an outer surface is polygonal, and which has a conical shape in which a width of the outer surface gradually decreases from a lower end to an upper end.

An inner conical screw coupling portion for inclination contact with an abutment screw for fastening the abutment in inclined conical contact with the outer conical abutment coupling portion may be provided in an upper end portion of an inner wall of the outer conical abutment coupling portion.

A straight line connecting from a lower end of the non-thread connection portion to an upper end of the non-thread variable portion may have an angle of -5 degrees to 5 degrees with respect to a longitudinal center axis of the non-thread body.

The non-thread variable portion may be inclined 0 degrees to 3 degrees with respect to a longitudinal center axis of the non-thread body.

At least one groove may be provided in the non-thread variable portion by being recessed a predetermined depth from the outer surface in a radial direction.

The at least one groove may include a plurality of grooves spaced apart from each other in a lengthwise direction of the non-thread body, and the plurality of grooves may include: a plurality of cuff micro grooves spaced apart from each other in the lengthwise direction of the non-thread body; and a small micro groove provided between the plurality of cuff micro grooves and having a depth less than a depth of each of the plurality of cuff micro grooves.

A threaded portion of the thread body may include a continuously threaded portion that is spirally formed in an outer circumference direction continuously with no disconnected section.

A taper portion having a diameter decreasing toward a lower end may be provided in a lower end portion of the thread body.

According to another aspect of the inventive concept, a fixture for dental implant includes: a thread body having a threaded portion spirally formed in an outer circumference direction and placed in a basal bone; and a non-thread body arranged above the thread body and having at least a portion arranged above the basal bone when the thread body is placed in the basal bone, wherein the non-thread body includes a non-thread variable portion having a diameter that is the same as or less than a maximum outer diameter of the threaded portion, provided with the same diameter from a lower end to an upper end or with a diameter gradually decreasing from the lower end to the upper end, and capable of naturally entering according to entering of the threaded portion; a non-thread connection portion connecting the thread body to the non-thread variable portion; and a non-thread abutment coupling portion provided above the non-thread variable portion for coupling to an abutment.

The non-thread abutment coupling portion is an outer conical abutment coupling portion, in which a cross-section of an outer surface is polygonal, and which has a conical shape in which a width of the outer surface gradually decreases from a lower end to an upper end.

An inner conical screw coupling portion for inclination contact with an abutment screw for fastening the abutment in inclined conical contact with the outer conical abutment coupling portion may be provided in an upper end portion of an inner wall of the outer conical abutment coupling portion.

The thread body may be surface-treated by any one of a sandblasted, large grit, and acid-etched (SLA) surface treatment and a resorbable blast media (RBM) surface treatment, and the non-thread body may not be surface-treated by any one of a sandblasted, large grit, and acid-etched (SLA) surface treatment and a resorbable blast media (RBM) surface treatment.

The non-thread body may have a machined surface.

At least a portion of the non-thread body may be in contact with the alveolar bone when the thread body is placed in the basal bone.

A straight line connecting from a lower end of the non-thread connection portion to an upper end of the non-thread variable portion may have an angle of -5 degrees to 5 degrees with respect to a longitudinal center axis of the non-thread body.

The non-thread variable portion may be inclined 0 degrees to 3 degrees with respect to a longitudinal center axis of the non-thread body.

At least one groove may be provided in the non-thread variable portion by being recessed a predetermined depth from the outer surface in a radial direction.

The at least one groove may include a plurality of grooves spaced apart from each other in a lengthwise direction of the non-thread body, and the plurality of grooves may include: a plurality of cuff micro grooves spaced apart from each other in the lengthwise direction of the non-thread body; and a small micro groove provided between the plurality of cuff micro grooves and having a depth less than a depth of each of the plurality of cuff micro grooves.

A threaded portion of the thread body may include a continuously threaded portion that is spirally formed in an outer circumference direction continuously with no disconnected section.

A taper portion having a diameter decreasing toward a lower end may be provided in a lower end portion of the thread body.

According to another aspect of the inventive concept, a dental implant system includes: a first fixture including: a first thread body having a first threaded portion spirally formed in an outer circumference direction and placed in a basal bone; and a first non-thread body having at least a portion arranged above the basal bone when the first thread body is placed in the basal bone; and a second fixture including: a second thread body having a second threaded portion having a same shape as the first threaded portion and having a same shape as the first thread body; and a second non-thread body arranged above the second thread body and having a length greater than a length of the first thread body.

The first non-thread body may include: a first non-thread variable portion having a diameter same as or less than a maximum outer diameter of the first threaded portion, provided with a same diameter from a lower end to an upper end or with a diameter gradually decreasing from the lower end to the upper end, and capable of naturally entering according to entering of the threaded portion; a first non-thread connection portion connecting the first thread body to the first non-thread variable portion; and a first non-thread abutment coupling portion provided above the first non-thread variable portion for coupling to an abutment, and the second non-thread body may include: a second non-thread variable portion having a length greater than the first non-thread variable portion; a second non-thread connection portion having a same shape as the first non-thread connection portion; and a second non-thread abutment coupling portion having a same shape as the first non-thread abutment coupling portion.

The first non-thread abutment coupling portion and the second non-thread abutment coupling portion respectively is a first outer conical abutment coupling portion and a second outer conical abutment coupling portion, in which a cross-section of an outer surface is polygonal, and which has a conical shape in which a width of the outer surface gradually decreases from a lower end to an upper end.

A first inner conical screw coupling portion and a second inner conical screw coupling portion for inclination contact with abutment screws for fastening the abutments respectively in inclined conical contact with the first outer conical abutment coupling portion and the second outer conical abutment coupling portion may be provided in respective upper end portions of inner walls of the first outer conical abutment coupling portion and second outer conical abutment coupling portion.

A straight line connecting from a lower end of the first non-thread connection portion to an upper end of the first non-thread variable portion may have an angle of -5 degrees to 5 degrees with respect to a longitudinal center axis of the first non-thread body.

The first non-thread variable portion may be inclined 0 degrees to 3 degrees with respect to a longitudinal center axis of the non-thread body.

At least one first groove and at least one second groove may be respectively provided in the first non-thread variable portion and second non-thread variable portion by being recessed a predetermined depth from the respective outer surfaces in a radial direction.

The at least one first groove and the at least one second groove may respectively include a plurality of first grooves and a plurality of second grooves respectively spaced apart from each other in lengthwise directions of the first non-thread body and the second non-thread body, and the plurality of first grooves may include: a plurality of cuff micro grooves spaced apart from each other in the lengthwise direction of the first non-thread body; and a first small micro groove provided between the plurality of first cuff micro grooves and having a depth less than a depth of each of the plurality of first cuff micro grooves.

The first thread body and second thread body may be surface-treated by any one of a sandblasted, large grit, and acid-etched (SLA) surface treatment and a resorbable blast media (RBM) surface treatment, and the first non-thread body and the second non-thread body may not be surface-treated by any one of a sandblasted, large grit, and acid-etched (SLA) surface treatment and a resorbable blast media (RBM) surface treatment.

The first non-thread body and the second non-thread body may each have a machined surface.

The first non-thread body and the second non-thread body may respectively have lengths of 0.8 times to 1.5 times lengths of the first thread body and the second thread body.

The first threaded portion of the first thread body and the second threaded portion of the second thread body may respectively include a first continuously threaded portion and a second continuously threaded portion that are continuously and spirally formed in an outer circumference direction without a disconnected section.

A first taper portion and a second taper portion, each having a diameter decreasing toward a lower end, may respectively be provided in lower end portions of the first thread body and the second thread body.

### MODE OF DISCLOSURE

The attached drawings for illustrating preferred embodiments of the inventive concept are referred to in order to gain a sufficient understanding of the inventive concept, the merits thereof, and the objectives accomplished by the implementation of the inventive concept.

Hereinafter, the inventive concept will be described in detail by explaining preferred embodiments of the inventive concept with reference to the attached drawings. However, in describing the inventive concept, a description of a well-known function or configuration will be omitted in order to clarify the gist of the inventive concept.

The attached drawings for illustrating preferred embodiments of the inventive concept are referred to in order to gain a sufficient understanding of the inventive concept, the merits thereof, and the objectives accomplished by the implementation of the inventive concept.

Hereinafter, the inventive concept will be described in detail by explaining preferred embodiments of the inventive concept with reference to the attached drawings. Throughout the drawings, like reference numerals denote like elements.

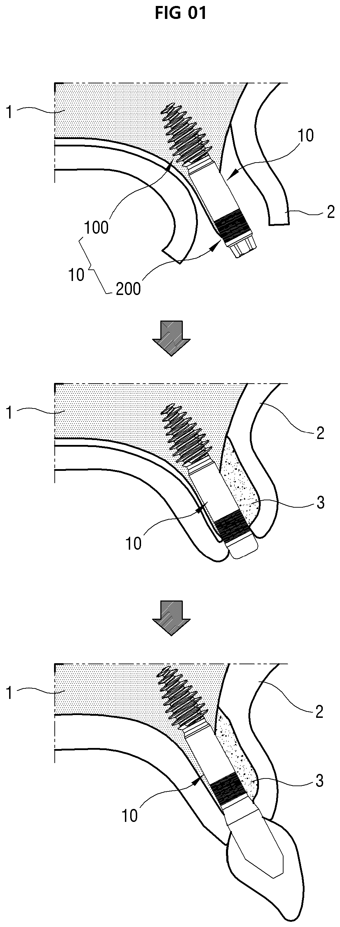

FIG. 1 is a view illustrating the procedure process of a fixture for dental implant according to an embodiment of the inventive concept.

A large number of teeth are arranged in the gingiva. Teeth are the primary means of digestion that break food into small pieces and send the pieces to the stomach. Although the number of teeth may vary from person to person, there are usually about 28 teeth. If any one of these teeth is lost (posterior part missing), the missing tooth not only reduces aesthetics but also makes chewing food significantly inconvenient. Accordingly, a fixture is placed in the gingiva of a missing tooth as a means to replace the root of the tooth. The fixture may be manufactured from titanium (Ti) or a Ti alloy, which has no rejection reaction to the human body.

Referring to FIG. 1, in a dental fixture 10 according to the present embodiment, a threaded portion 101 is placed in a basal bone 1, unlike the conventional technology in which the threaded portion 101 is placed in the alveolar bone. Accordingly, as an implant procedure may be performed without performing bone grafting before placing the fixture 10, an implant procedure time may be reduced, and even when the alveolar bone is weak or the bone density and bone mass of the alveolar bone are insufficient, the implant procedure is possible without bone grafting.

Of course, in the dental implant system according to the present embodiment, as illustrated in FIG. 1, for example, when it is necessary for shape restoration of gingiva 2 for aesthetics and the like, bone grafting may be performed after the fixture 10 is placed in the basal bone 1. However, as this bone grafting can be performed after the fixture 10 is placed in the basal bone, unlike the conventional technology, which requires the fixture 10 be placed in the alveolar bone 3 transplanted after bone grafting is completed, the implant procedure time may not be prolonged. In other words, in the present embodiment, bone grafting is performed for aesthetics and the like so as to restore the shape of gingiva, unlike the conventional method of performing bone grafting for placement.

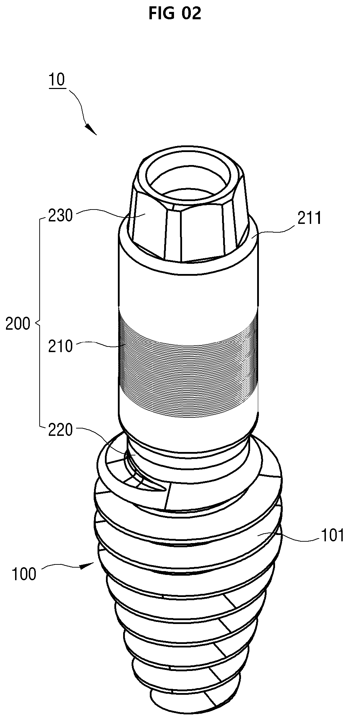

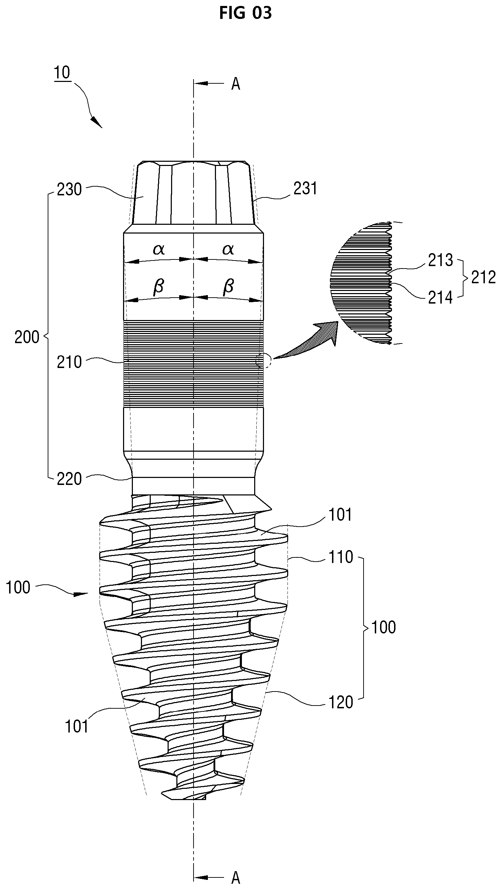

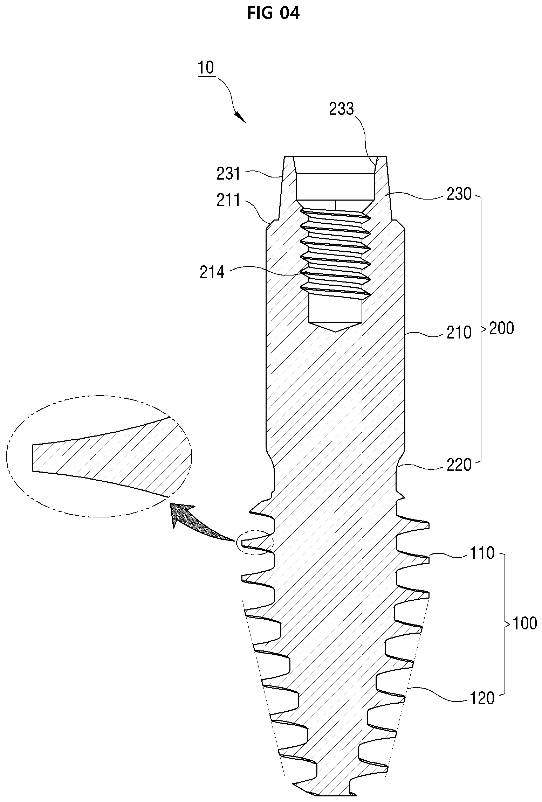

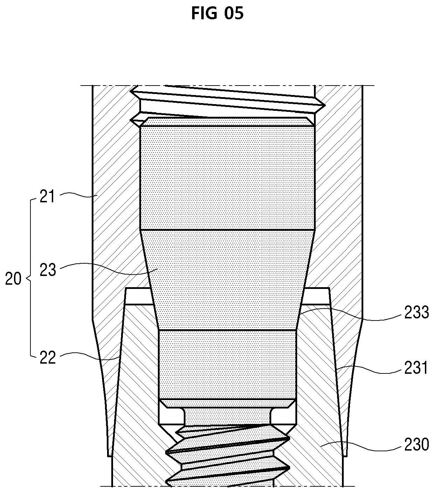

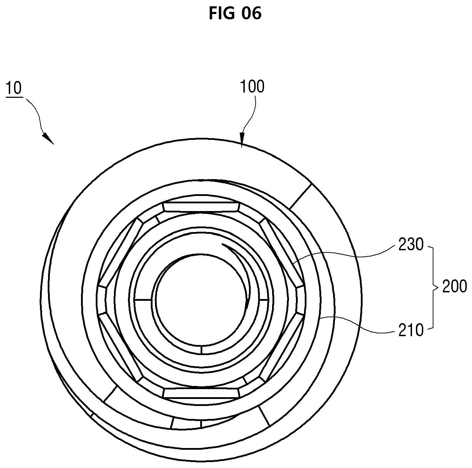

FIG. 2 is a perspective view of the fixture for dental implant of FIG. 1. FIG. 3 is a side view of the fixture for dental implant of FIG. 1. FIG. 4 is a cross-sectional view of the fixture for dental implant of FIG. 1. FIG. 5 is a view illustrating a state in which an abutment and an abutment screw are coupled to each other in the fixture for dental implant of FIG. 4. FIG. 6 is a plan view of the fixture for dental implant of FIG. 1.

As illustrated in these drawings, the fixture 10 of a dental implant according to the present embodiment may include a thread body 100 on which the threaded portion 101 is provided and a non-thread body 200 arranged above the thread body 100.

The thread body 100 may include a cylindrical portion 110 formed to have the same diameter and a taper portion 120 provided in a lower end portion of the cylindrical portion 110 and having a diameter gradually decreasing toward a lower end. In particular, in the present embodiment, the lowermost end portion of the taper portion 120 has a sharp apex design.

As the cylindrical portion 110 serves to facilitate the initial placement and the taper portion 120 serves to provide a strong fixing force, improved effects may be obtained in the placement and fixing. In this case, although the inclination angle of the taper portion 120 may have a range of 10 degrees to 60 degrees, the right scope of the inventive concept may not necessarily be limited to the above figures. Also, in the present embodiment, although the thread body 100 is described as including the cylindrical portion 110 and the taper portion 120, if the threaded portion 101 is provided on the thread body 100, the shape of the thread body 100 may be changed in various ways.

The thread body 100 includes the threaded portion 101 that is spirally formed in the outer circumference direction. The thread body 100 is provided under the non-thread body 200 having a length of 0.8 times to 1.5 times the length of the thread body 100 so as to be placed in the basal bone, unlike the conventional technology. In other words, as the non-thread body 200 is relatively long, unlike the conventional technology, the thread body 100 may reach the basal bone, and the non-thread body 200 having the length of 0.8 times to 1.5 times the length of the thread body 100 is for this purpose, and if the length is shorter or greater than the length, while placed in the basal bone, such a structure is inappropriate to solve the above problems.

The threaded portion 101 of the thread body 100, in the present embodiment, may be spirally formed in the outer circumference direction as a continuous screw thread that is continuously formed with no disconnected section. However, the right scope of the inventive concept is not limited thereto, and a cutting edge may be provided in the threaded portion 101.

Meanwhile, the non-thread body 200 is arranged above the thread body 100, and when the thread body 100 is placed in the basal bone, the non-thread body 200 is arranged above the basal bone. As the non-thread body 200 is not provided with the threaded portion 101, placement is facilitated when the outer diameter of the non-thread body 200 is the same as or less than the maximum outer diameter of the threaded portion 101 of the thread body 100.

In other words, when the thread body 100 is placed in the basal bone, the non-thread body 200 is generally arranged in the alveolar bone and a gingiva portion. As the non-thread body 200 is not provided with the threaded portion 101, the non-thread body 200 is formed to have the outer diameter to be the same as or less than the maximum outer diameter of the threaded portion 101 of the thread body 100 so that the non-thread body 200 can naturally enter a drill hole in the alveolar bone and the gingiva portion, through which the threaded portion 101 of the thread body 100 passes.

As such, unlike the conventional structure, as the non-thread body 200 that is sufficiently long, but not too long, is provided, even when the non-thread body 200 is partially exposed in the anterior teeth portion and the like, the threaded portion 101 is not exposed so that aesthetics may be maintained and bacterial growth may be inhibited, thereby reducing the bone recession in the alveolar bone compared with the conventional technology.

The non-thread body 200 may have a length of 0.8 times to 1.5 times the length of the thread body 100. In particular, the non-thread body 200 may have a length of 1.0 time to 1.5 times the length of the thread body 100. The dimension of the length of the non-thread body 200 is within 3 mm to 10 mm depending on the thread body 100.

The thread body 100 is surface-treated by any one of a sandblasted, large grit, and acid-etched (SLA) surface treatment and a resorbable blast media (RBM) surface treatment, whereas the non-thread body 200 is not surface-treated by any one of the sandblasted, large grit, and acid-etched (SLA) surface treatment and the resorbable blast media (RBM) surface treatment.

The thread body 100 is surface-treated by any one of a sandblasted, large grit, and acid-etched (SLA) surface treatment and a resorbable blast media (RBM) surface treatment to improve osseointegration, whereas in the case of the non-thread body 200, in order to have a surface capable of resisting bacteria, a machined surface treatment (to be described later) is performed or a groove is formed at the portion in contact with the gingiva.

Here, in the sandblasted, large grit, and acid-etched (SLA) surface treatment method, a fixture body is cut by blowing large metal particles with high pressure and then acid-corrosion processed. Then, the fixture surface cut by blowing large particles first becomes slightly rough, and when the fixture surface is acid-corrosion processed, very high portions are lowered and slightly flat portions have wavy corrosion craters formed thereon so that an appropriate degree of roughness is formed. The SLA surface-treated surface may be suitable for bone cells to adhere.

In the RBM surface treatment method, according to the conventional technology, aluminum oxides are used as metal particles when performing sandblasting. Considering that the aluminum oxides that are left on the fixture surface may be problematic, calcium phosphate particles that are completely melt in the body are used for hitting so as to be acid treated.

The non-thread body 200 may have, as described above, a machined surface, that is, a smooth surface. As such, the smooth surface treatment may remove small holes in the fixture surface so that places for bacteria to live are removed. In other words, the treated surface resists bacteria and is easy to clean.

Furthermore, as described above, when the thread body 100 is placed in the basal bone, at least a portion of the non-thread body 200 may be brought into contact with the alveolar bone and another portion thereof may be brought into contact with the gingiva.

The non-thread body 200 may include a non-thread variable portion 210, a non-thread connection portion 220, and a non-thread abutment coupling portion 230. In the present embodiment, taken as a whole, the non-thread body 200 is provided to have a straight line connecting from the lower end of the non-thread connection portion 220 to the upper end of the non-thread variable portion 210 and having an angle a of -5 degrees to 5 degrees with respect to the longitudinal center axis of the non-thread body 200.

The non-thread variable portion 210 is provided to naturally enter according to the entering of the threaded portion 101 as described above. Accordingly, while having a dimeter that is the same as or less than the outer diameter of the threaded portion 101, the non-thread variable portion 210 may be provided to have the same diameter from the lower end to the upper end or a diameter gradually decreasing from the lower end to the upper end. In the present embodiment, the outer diameter of the non-thread variable portion 210 may have a diameter less than the maximum outer diameter of the threaded portion 101, and an angle β inclined 0 degrees to 3 degrees with respect to the longitudinal center axis of the non-thread body 200.

A bevel portion 211 is formed in a corner area of the upper end portion of the non-thread variable portion 210. The bevel portion 211 provides a large contact area so as to provide a strong fixing force.

Meanwhile, at least one groove 212 may be provided in the non-thread variable portion 210 by being recessed a predetermined depth from the outer surface in a radial direction. In the present embodiment, the at least one groove 212 may include a plurality of grooves 212 spaced apart from each other in the lengthwise direction of the non-thread body 200. The grooves 212 are provided to be in contact with gingiva to maximize cell culture and spreading.

The grooves 212 may include cuff micro grooves 213 and small micro grooves 214.

The cuff micro grooves 213 are spaced apart from each other in the lengthwise direction of the non-thread body 200.

The small micro grooves 214 are provided between the cuff micro grooves 213 and have a depth that is less than that of the cuff micro grooves 213.

In the present embodiment, although the grooves 212 is described as including the cuff micro grooves 213 and the small micro grooves 214, the right scope of the inventive concept is not limited thereto, and the grooves 212 may include only one of the cuff micro grooves 213 and the small micro grooves 214.

The non-thread connection portion 220 connects the thread body 100 and the non-thread variable portion 210 to each other. Accordingly, the outer surface of the non-thread connection portion 220 may include a curved surface for a smooth connection between the thread body 100 and the non-thread variable portion 210.

The non-thread abutment coupling portion 230 is provided above the non-thread variable portion 210 for the coupling to an abutment 20. The non-thread abutment coupling portion 230 may be an outer conical abutment coupling portion 231, in which the outer surface has a polygonal cross-section, and which has a conical shape in which the width of the outer surface gradually decreases from the lower end to the upper end. In the conventional technology, the coupling portion having a polygonal cross-section coupled to the abutment 20 has a structure linearly extending in the vertical direction. In the present embodiment, however, the polygonal outer surface has a conical shape in the vertical direction so that the non-thread abutment coupling portion 230 and the abutment 20 may have a solid conical connection.

Here, the abutment 20 may include an abutment body 21 having a truncated conical shape and a through hole formed therein, an abutment body coupling portion 22 formed in the lower end portion of the abutment body 21, and an abutment screw 23 for coupling the abutment body 21 to the non-thread body 200.

The abutment body coupling portion 22 is a portion coupled to the non-thread abutment coupling portion 230, and as the non-thread abutment coupling portion 230, that is, the outer conical abutment coupling portion 231, has a conical shape in which the width of the outer surface gradually decreases toward the upper end thereof, to enable a conical connection with the non-thread abutment coupling portion 230, the inner wall of the abutment body coupling portion 22 is tapered such that the width of the inner surface gradually decreases toward the upper end thereof. Accordingly, the outer surface of the non-thread abutment coupling portion 230 and the inner surface of the abutment body coupling portion 22 form a conical connection.

Furthermore, an inner conical screw coupling portion 233 having an inner diameter gradually increasing toward the upper end thereof for inclination contact with the abutment screw 23 is provided in the upper end portion of the inner wall of the outer conical abutment coupling portion 231.

Accordingly, the outer conical abutment coupling portion 231 having the outer surface in inclined conical contact with the abutment body 21, and the inner conical screw coupling portion 233 having the inner surface in inclined conical contact with the abutment screw 23, are provided in the upper end portion of the non-thread body 200.

A screw hole is a portion fastened by the abutment screw 23 that passed through a through hole of the abutment body 21, when the abutment body coupling portion 22 of the abutment 20 is coupled to the non-thread abutment coupling portion 230.

Meanwhile, the threaded portion 101 formed on the thread body 100 is a portion spirally formed in at least a partial section on the outer surface of the thread body 100 and placed in a drill hole at a placement position in the basal bone.

In the shape and structural characteristics of the threaded portion 101, the threaded portion 101 is provided with a leading end portion having a shape that is vertical or inclined in one side, an upper curved surface portion forming an upper surface of the leading end portion, and a lower curved surface portion forming a lower surface of the leading end portion.

In detail, in the present embodiment, the shape of the crest of the threaded portion 101, that is, the shape of the threaded portion 101 in the present embodiment, is out of the usual shape, such as a triangular screw or a rectangular screw, and thus, the upper surface and lower surface thereof are processed into a convex shape, not a straight shape, with respect to the leading end portion.

While the leading end portion is provided in a straight line shape that is substantially vertical, the upper and lower portion of the threaded portion 101 are formed as upper and lower curved surface portions with respect to the leading end portion, the upper and lower curved surface portions being in a convex (concave when seen from the opposite side) shape respectively upward and downward. Of course, although only one of the upper and lower curved surface portions may be formed, it is preferable that, as in the present embodiment, the upper and lower curved surface portions are symmetrical with respect to the leading end portion. When the threaded portion 101 has the shape or structural characteristics described above, the placement of the fixture 10 is made easy as a relatively small resistance torque is applied for placement.

For reference, a spreading angle θ between virtual straight lines forming the upper and lower curved surface portions may be about 30 degrees, but not limited thereto. Also, although the upper and lower curved surface portions are illustrated and described as being symmetrical to each other, as necessary, the upper and lower curved surface portions may have an asymmetrical shape. As a result, it suffices that the upper and lower curved surface portions serve to facilitate the placement of the fixture 10 by applying a resistance torque that is relatively small. Thus, the spreading angle between the upper and lower curved surface portions, and the symmetrical or asymmetrical structure of the upper and lower curved surface portions, may be changed appropriately depending on the situation.

The taper portion 120 is formed in a predetermined section upwardly from the lower end of the thread body 100 in a direction in which the thread body 100 is placed, and serves to facilitate initial placement entering with respect to the body portion.

The implant procedure based on the configuration described above is briefly described below.

First, a drill hole is formed by making a hole at a placement position by using a certain public drill (not shown). In this state, the diameter of the drill hole may be about the width of the maximum diametric portion of the thread body 100.

Next, the fixture 10 is first arranged at the placement position and the fixture 10 is inserted and placed into the drill hole of the basal bone. As such, when the fixture 10 is placed in the basal bone, the procedure may be directly performed without bone grafting so that the procedure time may be reduced.

In the placement process, once the direction of placement is set by the taper portion 120, the fixture 10 is placed by continuously rotating the same. Then, the placement is facilitated by the structural characteristics of the threaded portion 101, and when the placement is completed, the fixture 10 is fixed to the basal bone by a strong fixing force. Accordingly, osseointegration may be done more quickly without shaking in place.

When the placement of the fixture 10 is performed normally without failure, as necessary, bone grafting is performed and the gingiva shape may be restored. Then, a healing abutment and the like is coupled to the fixture 10 and osseointegration with respect to the fixture 10 is performed. When the osseointegration is completed, an abutment 20 is coupled to the non-thread abutment coupling portion 230 of the fixture 10.

When the abutment 20 is coupled to the non-thread abutment coupling portion 230, the abutment body coupling portion 22 of the abutment 20 is coupled to the non-thread abutment coupling portion 230. As the abutment body coupling portion 22 is coupled to the non-thread abutment coupling portion 230 through the conical connection, not only it is advantageous that the coupling is not removed well, but also as the abutment body coupling portion 22 is closely coupled to the non-thread abutment coupling portion 230, forming a seal, the risk of infection may be eliminated.

When the abutment body coupling portion 22 is coupled to the non-thread abutment coupling portion 230, the abutment screw 23 is inserted into the through hole of the abutment 20 to be fastened to the screw hole, and thus, the coupling of the abutment 20 is completed. In this state, as the inner conical screw coupling portion 233 and the abutment screw 23 are conically coupled to each other, the coupling therebetween is not removed well. Thereafter, the by capping the abutment 20 with a final prosthesis, the implant procedure is completed.

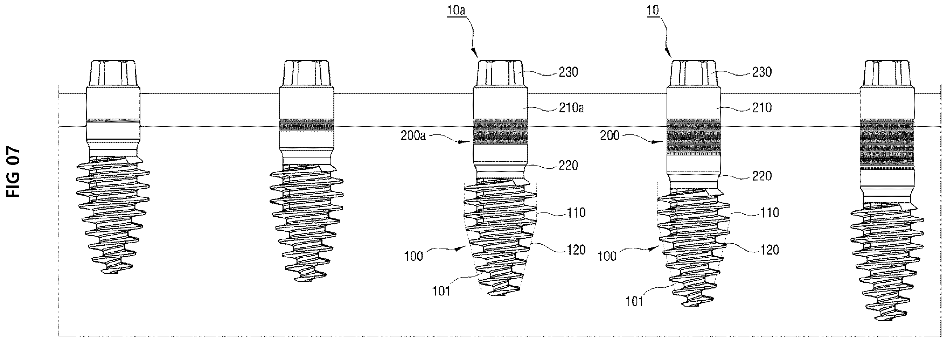

FIG. 7 is a view for describing an implant system including the fixture for dental implant of FIG. 1. Referring to FIG. 7 and FIGS. 1 to 6 together, the dental implant system according to the present embodiment may include a plurality of fixtures 10 and 10a having different lengths of the non-thread body 200 depending on the depth of the basal bone.

In detail, the dental implant system according to the present embodiment may include a first fixture 10 and a second fixture 10a in which a thread body 100 is the same as that of the first fixture 10, but a non-thread body 200a is different from that of the first fixture 10.

The first fixture 10 may include the first thread body 100 having a first threaded portion 101 spirally formed in the outer circumference direction and placed in the basal bone, and a first non-thread body 200 that is at least partially arranged above the basal bone when the first thread body 100 is placed in the basal bone.

The second fixture 10a may include the second thread body 100 having the second threaded portion 101 having the same shape as the first threaded portion 101, and having the same shape as the first thread body 100, and the second non-thread body 200a arranged above the second thread body 100 and longer than the first thread body 100. In other words, the second fixture 10a is different from the first fixture 10 only in the second non-thread body 200a that is longer than the first non-thread body 200, while all others may be the same. In particular, in the present embodiment, the second non-thread body 200a is provided such that only the length of the non-thread variable portion 210 of the first non-thread body 200 is different.

The dental implant system described above may implement an implant system in which the fixtures 10 and 10a are appropriately selected according to the depth from the gingiva of the basal bone and placed in the basal bone, not the alveolar bone.

As such, according to the implant system of the present embodiment, the fixture may be placed in the basal bone without first performing bone grafting so that an implant procedure time can be reduced, bone recession in the alveolar bone can be reduced compared with the conventional technology, excellent aesthetics can be obtained without exposing the threaded portion 101 of the fixture even when the fixture is placed in a rather narrow portion such as an anterior teeth portion, and easy application of the fixture is possible because the fixture can be used without major changes in the existing prosthesis.

Although the present embodiment is described above in detail with reference to the accompanying drawings, the scope of rights of the present embodiment is not limited to the above drawings and descriptions described above.

While the inventive concept has been particularly shown and described with reference to exemplary embodiments thereof, it will be understood that various changes in form and details may be made therein without departing from the spirit and scope of the following claims.

### INDUSTRIAL APPLICABILITY

The present inventive concept may be used for a medical industry, in particular, a dental medical industry.

## Claims

1. A fixture for dental implant comprising:
a thread body having a threaded portion spirally formed in an outer circumference direction and placed in a basal bone; and
a non-thread body arranged above the thread body, having at least a portion arranged above the basal bone when the thread body is placed in the basal bone, and having a length of 0.8 times to 1.5 times a length of the thread body.

2. The fixture for dental implant of claim 1, wherein the thread body is surface-treated by any one of a sandblasted, large grit, and acid-etched (SLA) surface treatment and a resorbable blast media (RBM) surface treatment, and the non-thread body is not surface-treated by any one of the sandblasted, large grit, and acid-etched (SLA) surface treatment and the resorbable blast media (RBM) surface treatment.

3. The fixture for dental implant of claim 1, wherein the non-thread body has a machined surface.

4. The fixture for dental implant of claim 1, wherein at least a portion of the non-thread body is in contact with an alveolar bone when the thread body is placed in the basal bone.

5. The fixture for dental implant of claim 1, wherein the non-thread body has a length of 1.0 time to 1.5 times a length of the thread body.

6. The fixture for dental implant of claim 1, wherein the non-thread body comprises:
a non-thread variable portion having a diameter that is same as or less than a maximum outer diameter of the threaded portion, provided with a same diameter from a lower end to an upper end or with a diameter gradually decreasing from the lower end to the upper end, and capable of naturally entering according to entering of the threaded portion;
a non-thread connection portion connecting the thread body to the non-thread variable portion; and
a non-thread abutment coupling portion provided above the non-thread variable portion for coupling to an abutment.

7. The fixture for dental implant of claim 6, wherein the non-thread abutment coupling portion is an outer conical abutment coupling portion, in which a cross-section of an outer surface is polygonal, and which has a conical shape in which a width of the outer surface gradually decreases from a lower end to an upper end.

8. The fixture for dental implant of claim 6, wherein an inner conical screw coupling portion for inclination contact with an abutment screw for fastening the abutment in inclined conical contact with the outer conical abutment coupling portion is provided in an upper end portion of an inner wall of the outer conical abutment coupling portion.

9. The fixture for dental implant of claim 6, wherein a straight line connecting from a lower end of the non-thread connection portion to an upper end of the non-thread variable portion has an angle of - 5 degrees to 5 degrees with respect to a longitudinal center axis of the non-thread body.

10. The fixture for dental implant of claim 6, wherein the non-thread variable portion is inclined 0 degrees to 3 degrees with respect to a longitudinal center axis of the non-thread body.

11. The fixture for dental implant of claim 6, wherein at least one groove is provided in the non-thread variable portion by being recessed a predetermined depth from the outer surface in a radial direction.

12. The fixture for dental implant of claim 11, wherein the at least one groove comprises a plurality of grooves spaced apart from each other in a lengthwise direction of the non-thread body, and
the plurality of grooves comprise:
a plurality of cuff micro grooves spaced apart from each other in the lengthwise direction of the non-thread body; and
a small micro groove provided between the plurality of cuff micro grooves and having a depth less than a depth of each of the plurality of cuff micro grooves.

13. The fixture for dental implant of claim 1, wherein a threaded portion of the thread body comprises a continuously threaded portion that is spirally formed in an outer circumference direction continuously with no disconnected section.

14. The fixture for dental implant of claim 1, wherein a taper portion having a diameter decreasing toward a lower end is provided in a lower end portion of the thread body.

15. A fixture for dental implant comprising:
a thread body having a threaded portion spirally formed in an outer circumference direction and placed in a basal bone; and
a non-thread body arranged above the thread body and having at least a portion arranged above the basal bone when the thread body is placed in the basal bone,
wherein the non-thread body comprises:
a non-thread variable portion having a diameter that is same as or less than a maximum outer diameter of the threaded portion, provided with a same diameter from a lower end to an upper end or with a diameter gradually decreasing from the lower end to the upper end, and capable of naturally entering according to entering of the threaded portion;
a non-thread connection portion connecting the thread body to the non-thread variable portion; and
a non-thread abutment coupling portion provided above the non-thread variable portion for coupling to an abutment.

16. The fixture for dental implant of claim 14, wherein the non-thread abutment coupling portion is an outer conical abutment coupling portion, in which a cross-section of an outer surface is polygonal, and which has a conical shape in which a width of the outer surface gradually decreases from a lower end to an upper end.

17. The fixture for dental implant of claim 16, wherein an inner conical screw coupling portion for inclination contact with an abutment screw for fastening the abutment in inclined conical contact with the outer conical abutment coupling portion is provided in an upper end portion of an inner wall of the outer conical abutment coupling portion.

18. The fixture for dental implant of claim 15, wherein the thread body is surface-treated by any one of a sandblasted, large grit, and acid-etched (SLA) surface treatment and a resorbable blast media (RBM) surface treatment, and the non-thread body is not surface-treated by any one of the sandblasted, large grit, and acid-etched (SLA) surface treatment and the resorbable blast media (RBM) surface treatment.

19. The fixture for dental implant of claim 15, wherein the non-thread body has a machined surface.

20. The fixture for dental implant of claim 15, wherein at least a portion of the non-thread body is in contact with an alveolar bone when the thread body is placed in the basal bone.

21. The fixture for dental implant of claim 15, wherein a straight line connecting from a lower end of the non-thread connection portion to an upper end of the non-thread variable portion has an angle of - 5 degrees to 5 degrees with respect to a longitudinal center axis of the non-thread body.

22. The fixture for dental implant of claim 15, wherein the non-thread variable portion is inclined 0 degrees to 3 degrees with respect to a longitudinal center axis of the non-thread body.

23. The fixture for dental implant of claim 15, wherein at least one groove is provided in the non-thread variable portion by being recessed a predetermined depth from the outer surface in a radial direction.

24. The fixture for dental implant of claim 23, wherein the at least one groove comprises a plurality of grooves spaced apart from each other in a lengthwise direction of the non-thread body, and
the plurality of grooves comprise:
a plurality of cuff micro grooves spaced apart from each other in the lengthwise direction of the non-thread body; and
a small micro groove provided between the plurality of cuff micro grooves and having a depth less than a depth of each of the plurality of cuff micro grooves.

25. The fixture for dental implant of claim 15, wherein a threaded portion of the thread body comprises a continuously threaded portion that is continuously and spirally formed in an outer circumference direction without a disconnected section.

26. The fixture for dental implant of claim 15, wherein a taper portion having a diameter decreasing toward a lower end is provided in a lower end portion of the thread body.

27. A dental implant system comprising:
a first fixture comprising: a first thread body having a first threaded portion spirally formed in an outer circumference direction and placed in a basal bone; and a first non-thread body having at least a portion arranged above the basal bone when the first thread body is placed in the basal bone; and
a second fixture comprising: a second thread body having a second threaded portion having a same shape as the first threaded portion and having a same shape as the first thread body; and a second non-thread body arranged above the second thread body and having a length greater than a length of the first thread body.

28. The dental implant system of claim 27, wherein the first non-thread body comprises:
a first non-thread variable portion having a diameter same as or less than a maximum outer diameter of the first threaded portion, provided with a same diameter from a lower end to an upper end or with a diameter gradually decreasing from the lower end to the upper end, and capable of naturally entering according to entering of the threaded portion;
a first non-thread connection portion connecting the first thread body to the first non-thread variable portion; and
a first non-thread abutment coupling portion provided above the first non-thread variable portion for coupling to an abutment, and
the second non-thread body comprises:
a second non-thread variable portion having a length greater than the first non-thread variable portion;
a second non-thread connection portion having a same shape as the first non-thread connection portion; and
a second non-thread abutment coupling portion having a same shape as the first non-thread abutment coupling portion.

29. The dental implant system of claim 28, wherein the first non-thread abutment coupling portion and the second non-thread abutment coupling portion respectively is a first outer conical abutment coupling portion and a second outer conical abutment coupling portion, in which a cross-section of an outer surface is polygonal, and which has a conical shape in which a width of the outer surface gradually decreases from a lower end to an upper end.

30. The dental implant system of claim 28, wherein a first inner conical screw coupling portion and a second inner conical screw coupling portion for inclination contact with abutment screws for fastening the abutments respectively in inclined conical contact with the first outer conical abutment coupling portion and the second outer conical abutment coupling portion are provided in respective upper end portions of inner walls of the first outer conical abutment coupling portion and second outer conical abutment coupling portion.

31. The dental implant system of claim 28, wherein a straight line connecting from a lower end of the first non-thread connection portion to an upper end of the first non-thread variable portion has an angle of -5 degrees to 5 degrees with respect to a longitudinal center axis of the first non-thread body.

32. The dental implant system of claim 28, wherein the first non-thread variable portion is inclined 0 degrees to 3 degrees with respect to a longitudinal center axis of the non-thread body.

33. The dental implant system of claim 28, wherein at least one first groove and at least one second groove are respectively provided in the first non-thread variable portion and second non-thread variable portion by being recessed a predetermined depth from the respective outer surfaces in a radial direction.

34. The dental implant system of claim 33, wherein the at least one first groove and the at least one second groove respectively comprise a plurality of first grooves and a plurality of second grooves respectively spaced apart from each other in lengthwise directions of the first non-thread body and the second non-thread body, and
the plurality of first grooves comprise:
a plurality of first cuff micro grooves spaced apart from each other in the lengthwise direction of the first non-thread body; and
a first small micro groove provided between the plurality of first cuff micro grooves and having a depth less than a depth of each of the plurality of first cuff micro grooves.

35. The dental implant system of claim 27, wherein the first thread body and the second thread body are surface-treated by any one of a sandblasted, large grit, and acid-etched (SLA) surface treatment and a resorbable blast media (RBM) surface treatment, and the first non-thread body and the second non-thread body are not surface-treated by any one of the sandblasted, large grit, and acid-etched (SLA) surface treatment and the resorbable blast media (RBM) surface treatment.

36. The dental implant system of claim 27, wherein the first non-thread body and the second non-thread body each have a machined surface.

37. The dental implant system of claim 27, wherein the first non-thread body and the second non-thread body respectively have lengths of 0.8 times to 1.5 times lengths of the first thread body and the second thread body.

38. The dental implant system of claim 27, wherein the first threaded portion of the first thread body and the second threaded portion of the second thread body respectively comprise a first continuously threaded portion and a second continuously threaded portion that are continuously and spirally formed in an outer circumference direction without a disconnected section.

39. The dental implant system of claim 27, wherein a first taper portion and a second taper portion, each having a diameter decreasing toward a lower end, are respectively provided in lower end portions of the first thread body and the second thread body.
